# EUROPEAN PATENT SPECIFICATION

(11) **EP 4 566 455 B1**
(45) Date of publication and mention of the grant of the patent: **12.08.2026**
(21) Application number: 24217259.1
(22) Date of filing: 03.12.2024
(51) Int. Cl.: A23G 9/04, A23G 9/08, A23G 9/12, A23G 9/22, A23G 9/28

(54) **MACHINE FOR PROCESSING AND STORING LIQUID OR SEMI-LIQUID FOOD PRODUCTS**
MASCHINE ZUR VERARBEITUNG UND LAGERUNG VON FLÜSSIGEN ODER HALBFLÜSSIGEN NAHRUNGSMITTELN
MACHINE DE TRAITEMENT ET DE STOCKAGE DE PRODUITS ALIMENTAIRES LIQUIDES OU SEMI-LIQUIDES

(30) Priority: 05.12.2023 IT 202300026025
(43) Date of publication of application: 11.06.2025
(73) Proprietor: Ali Group S.r.l. - Carpigiani, 20063 Cernusco sul Naviglio, Milano (IT)
(72) Inventor: LAZZARINI, Roberto, 42100 Reggio Emilia (IT); TASSI, Federico, 40122 BOLOGNA (IT)
(74) Representative: Milli, Simone

(56) References cited:
- EP-A1- 3 520 623
- EP-A1- 3 563 691
- EP-A1- 4 101 309
- EP-A1- 4 218 425

## Description

This invention relates to a machine for processing and storing liquid or semi-liquid food products, in particular a machine for making and then storing such products inside the selfsame machine.

EP 4 101 309 A1 discloses a machine for processing and storing liquid or semi-liquid food products, comprising:
- a main frame;
- a container (2) for containing the product to be processed;
- a stirrer (4) mounted inside the container (2);
- an actuator (5) connected to the stirrer (4); - a refrigeration system (100), comprising: a closed circuit (101) configured to circulate a heat exchanger fluid, an evaporator (102) associated with the container (2), a compressor (103), a condenser (104) and a throttle element (105), said heat exchanger fluid flowing along the closed circuit (101) through the following, in succession: the evaporator

(102), the compressor (103), the condenser (104) and the throttle element (105), in that order;
- a control unit (U), the control unit (U) being configured to drive the regulating means (107) in such a way as to regulate the flow of primary heat exchanger fluid in the first and in the second condenser (104, 106) as a function of an operating parameter (O) of the machine (1).

This invention relates in particular to a machine which is capable of performing a batch freezing process.

The batch freezing process is generally very quick and little affected by the ambient conditions.

Static storage of the batch frozen product, on the other hand, is greatly dependent, for example, on external temperature, external temperature variations and ambient relative humidity.

In effect, ambient conditions have an influence on the storage life of batch frozen products such as ice cream, for example.

In particular, relative humidity - that is, the measure of the amount of water vapour in the air relative to the maximum amount of water vapour which the air could contain at a given temperature- affects the storage life of the ice cream predominantly through the phenomenon of ice formation on the surface of the ice cream itself.

When relative humidity is high, there is a large amount of water vapour carrying more air molecules onto the surface of the ice cream, where it cools and condenses.

This change of phase releases heat which further melts the ice cream. In dry air, there is practically no condensate and the ice cream melts much more slowly.

Known in the prior art are machines which are capable of correcting this phenomenon, thus minimizing its effect and lowering the temperature on the surface of the ice cream.

As a result, however, mixture, condensation and humidity freeze and form thin layers of ice on the surface of the product.

The ice thus formed may alter the consistency and organoleptic properties of the ice cream.

The ambient temperature is also a critical factor for the storage of ice cream, since excessive temperature variations may lead to melting followed by refreezing of the product, thus further altering its consistency and structure.

Generally speaking, the optimum conditions for storing ice cream are constant low temperature and moderate relative humidity to prevent ice from forming and settling on the surface of the food product which, therefore, tends to better keep its freshness, that is, its original consistency and flavour.

The aim of this invention is to provide a machine for processing and storing liquid or semi-liquid food products and which is capable of ensuring that the product is stored under optimal conditions.

In particular, the aim of this invention is to provide a machine for processing and storing liquid or semi-liquid food products and which is capable of preventing, or at least minimizing the formation and settling of ice on the surface of the product being processed and to be stored.

The present invention is defined in the appended claims.

The present invention discloses a machine for processing and storing liquid or semi-liquid food products, comprising:
- a main frame (2) having at least a top surface (21);
- at least one container (3) for containing the product to be processed and stored, the top surface (21) of the machine (1) having at least one opening (22) giving access to the container (3);
- a stirrer (4) mounted inside the container (3);
- an actuator (5) connected to the stirrer (4) or to the container (3) to drive the stirrer (4) relative to the container (3) or the container (3) relative to the stirrer (4), respectively, in rotation about a mixing axis (A);
- a refrigeration system (100), comprising: a closed circuit (101) configured to circulate a heat exchanger fluid, an evaporator (102) associated with the container (3), a compressor (103), a condenser (104) and a throttle element (105), said heat exchanger fluid flowing along the closed circuit (101) through the following, in succession: the evaporator (102), the compressor (103), the condenser (104) and the throttle element (105), in that order;
- a cover (6) movable between a closed position, where it closes said opening (22) to deny access to the container (3), and an open position, where it opens said opening (22) to give access to the container (3), the cover (6) defining, at the closed position, a space (V) between an inside surface (61) of the cover (6) and the top surface (21) of the main frame (2);
- a suction system (7) for extracting air from said space (V), comprising at least one suction unit (71) and one or more suction mouths (72) connected to the suction unit (71), each suction mouth (72) being in fluid communication with said space (V);
- a control unit (U) configured to control at least the actuator (5) and the suction unit (71).

The technical features of the invention, with reference to the above aims, are clearly described in the claims below and its advantages are apparent from the detailed description which follows, with reference to the accompanying drawings which illustrate an exemplary, hence non-limiting embodiment of the invention, and in which:

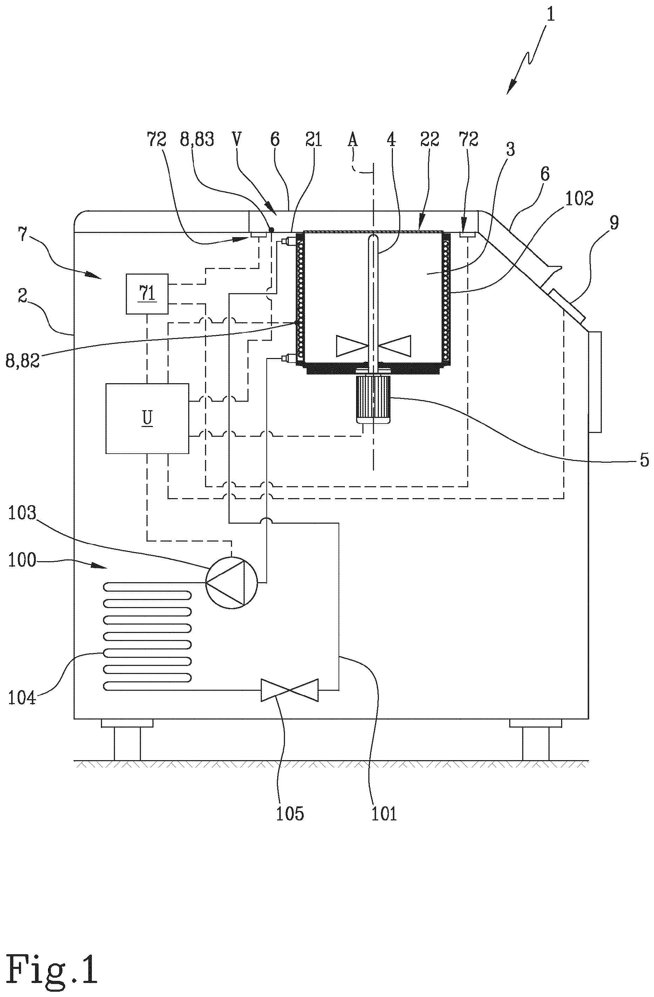

- Figures 1 and 2 show cross-sectional side views of embodiments of a machine according to this disclosure;

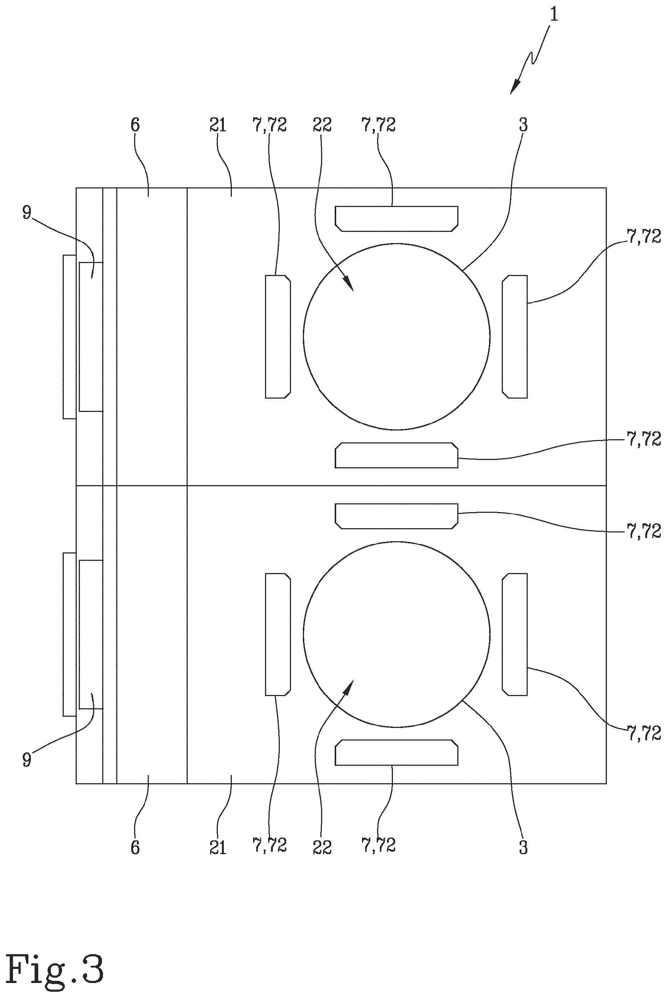

- Figure 3 shows a top cross-sectional view of a machine according to this disclosure.

With reference to the accompanying drawings, the numeral 1 denotes a machine for processing and storing liquid or semi-liquid food products according to this invention.

The machine 1 may allow the production of different types of liquid or semi-liquid products, such as, for example, ice creams, sorbets, yogurts, custards.

According to the invention, the machine 1 comprises a main frame 2 having at least a top surface 21.

The machine 1 comprises at least one container 3 for containing the product to be processed and stored.

In use, the container 3 is located inside a space defined by the main frame 2.

The top surface 21 of the machine 1 having at least one opening 22 giving access to the container 3.

In other words, the main frame 2 has, on its top surface 21, the access opening 22 through which the container 3 can be accessed.

Advantageously, accessing the container 3 allows placing the product to be processed by the machine 1 into the container 3 and/or taking the processed, stored product out of the container 3.

According to the invention, the machine 1 comprises a stirrer 4 mounted inside the container 3.

According to the invention, the machine 1 comprises an actuator 5 connected to the stirrer 4 or to the container 3 to drive the stirrer 4 relative to the container 3 or the container 3 relative to the stirrer 4, respectively, in rotation about a mixing axis A.

The machine 1 comprises a control unit U configured to control at least the actuator 5.

The machine 1 comprises a refrigeration system 100, comprising: a closed circuit 101 configured to circulate a heat exchanger fluid, an evaporator 102 associated with the container 3, a compressor 103, a condenser 104 and a throttle element 105.

The heat exchanger fluid in the closed circuit 101 flows through the following: the evaporator 102, the compressor 103, the condenser 104 and the throttle element 105, in that order.

The evaporator 102, in a preferred embodiment, is operatively coupled to the container 3, thus allowing heat to be exchanged between the heat exchanger fluid and the product being processed inside the container 3.

In an embodiment, the evaporator 102 and the container 3 have a partition wall in common. In particular, the partition wall has a surface in contact with the heat exchanger fluid and a further surface in contact with the product to be dispensed.

The container 3 is provided with walls having an inside surface 31 and, in this configuration, the walls of the container 3, because they are the closest to the evaporator 102, are subject to possible ice formation.

The evaporator 102 is preferably a coil wound around the container 3.

Preferably, the stirrer 4 is provided with blades which are adapted to prevent ice buildup on the inside surface 31 of the container 3; in effect, the blades are adapted to scrape the inside surface 31 of the container 3 as the stirrer 4 rotates.

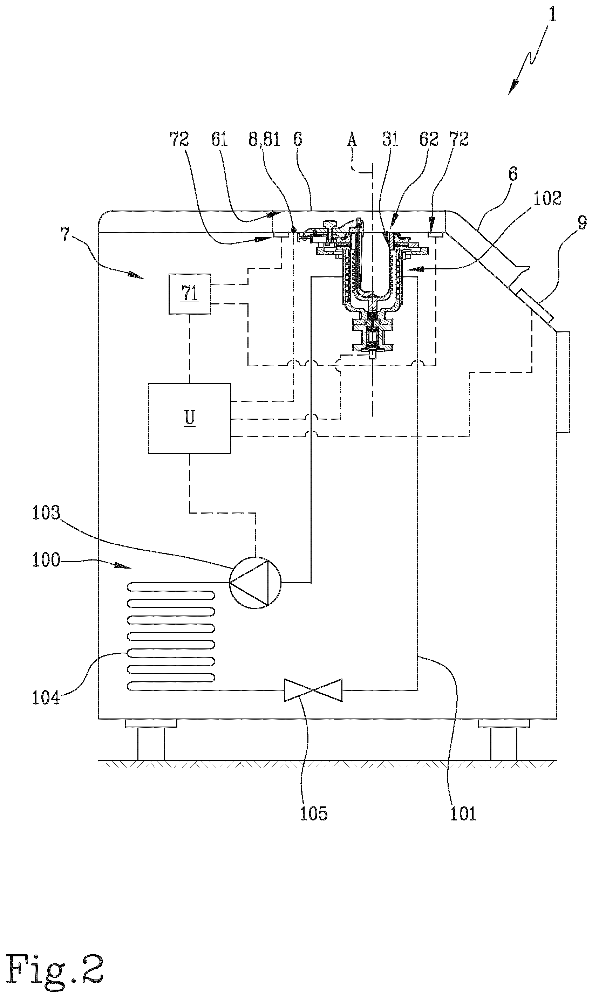

In an embodiment in which the actuator 5 is connected to the container 3 to drive the container 3 relative to the stirrer 4 in rotation about the mixing axis A, as illustrated schematically in Figure 2, the machine 1 has a compartment, where the container 3 is mounted, which can be filled with a secondary heat exchanger fluid.

The secondary fluid is preferably glycol.

The evaporator 102 is in contact with the outside walls of the compartment to exchange heat with the secondary heat exchanger fluid which, as it permeates the compartment, exchanges heat with the container 3, hence with the product contained therein.

Advantageously, this solution allows optimum heat exchange between evaporator 102 and product and, at the same time, allows the container 3 to rotate relative to the stirrer 4.

According to the invention, the machine 1 comprises a cover 6 movable between a closed position, where it closes said opening 22 to deny access to the container 3, and an open position, where it opens said opening 22 to give access to the container 3.

Advantageously, at the closed position, the cover 6 allows protecting the product, in particular the product being stored, against external agents or dust from the outside.

Advantageously, at the closed position, the cover 6 allows limiting heat exchange between the inside of the container 3, hence the product, and the exterior environment.

In an embodiment, the cover 6 is made of a transparent material.

In an embodiment, the cover 6 comprises a closing portion 62 for closing the opening 21 which gives access to the container 3.

Preferably, the machine 1 comprises a gasket located between the inside surface 31 of the container 3 and the closing portion of the cover 6.

According to an aspect, the closing portion 62 is configured to be inserted at least partly into the container 3 when the cover is at the closed position. The cover 6, at the closed position, defines a space V between an inside surface 61 of the cover 6 and the top surface 21 of the main frame 2.

It should be noted that the space V is permeated with air in direct contact with the container 3, with the inside surface 31 of the container 3 and with the surface of the product inside the container 3.

According to the invention, the machine 1 comprises a suction system 7 for extracting air from the space V.

It should be noted that extracting air from the space V enables the ambient conditions of the product being processed and stored to be varied and controlled.

The expression "ambient conditions" is used to mean aspects which are exterior to the product and which may directly or indirectly affect its quality such as, by way of non-limiting example, the temperature of the surfaces in contact with the product, the temperature of the air in contact with the product or the relative humidity of the surrounding air.

The suction system 7 comprises at least one suction unit 71 and one or more suction mouths 72 connected to the suction unit 71.

Each suction mouth 72 is in fluid communication with the space V to extract air from the interior of the space V.

Advantageously, extracting air from the space V allows minimizing the amount of water vapour inside the space. Consequently, it allows minimizing the water vapour phase transitions in contact with the surface of the ice cream.

Advantageously, extracting air from the space V thus allows preventing the formation of thin layers of ice on the surface of the product.

Advantageously, extracting air from the space allows conditioning the temperature inside the space V.

Advantageously, controlling the quantity of water vapour and the temperature inside the space V allows ensuring optimum conditions for product storage.

According to the invention, the control unit U is configured to control the suction unit 71.

In other words, the control unit U is configured to turn the suction unit 71 on and off.

In an embodiment, the suction unit 71 is a pump, configured to extract air. According to an aspect of this disclosure, one or more suction mouths 72 are located at a respective portion of the top surface 22 of the main frame 2.

According to an aspect of this disclosure, one or more suction mouths 72 are located at a respective portion of the cover 6.

It should be noted that the suction mouths 72 may differ in shape and size. The suction mouths 72 are preferably connected to the suction unit 71 by ducts which are illustrated only schematically in the accompanying drawings.

In the embodiment in which the suction mouths 72 are located at a respective portion of the cover 6, the ducts which connect the suction unit 71 to the suction mouths 72 may comprise at least one portion located outside the space defined by the main frame 2.

In an embodiment, the machine 1 may comprise a plurality of suction units 71 and the suction mouths 72 are connected to one or more suction units 71.

In a preferred embodiment, the machine 1 comprises at least one sensor 8 configured to detect a parameter defining an ambient condition of the product to be processed.

The sensor 8 is connected to the control unit U to send it a signal relating to the aforesaid parameter defining an ambient condition of the product to be processed.

The control unit U is configured to control the suction unit 71 as a function of said signal.

In other words, the control unit U turns the suction unit 71 on or off as a function of the signal sent by the sensor 8 and representing an ambient condition of the product.

Advantageously, controlling the extraction of air from the space V as a function of this signal allows controlling in real time the ambient conditions of the product being processed and/or stored, such as, for example, temperature and relative humidity of the air.

Advantageously, controlling the ambient conditions in real time allows ensuring the optimum product storage conditions.

According to an aspect of this disclosure, at least one sensor 8 is an air temperature sensor 81.

The air temperature sensor 81 is located inside the space V defined between the inside surface 61 of the cover 6 and the top surface 22 of the main frame 2 to detect a temperature of the air inside the space V.

Advantageously, the control unit U is configured to control the suction unit 71 as a function of the signal representing the temperature of the air inside the space V.

According to an aspect of this disclosure, at least one sensor 8 is a temperature sensor 82 for the heat exchanger fluid, located in the evaporator 102, for detecting a temperature of the heat exchanger fluid.

Advantageously, the control unit U is configured to control the suction unit 71 as a function of the signal representing the temperature of the heat exchanger fluid.

According to an aspect of this disclosure, at least one sensor 8 is a hygrometer 83, located inside the space V defined between the inside surface 61 of the cover 6 and the top surface 22 of the main frame 2, to detect a value of the relative humidity inside the space V.

Advantageously, the control unit U is configured to control the suction unit 71 as a function of the signal representing the value of the relative humidity inside the space V.

Preferably, the machine 1 comprises a user interface 9 which is connected to the control unit U.

The user interface 9 comprises at least one user operable control.

The user interface 9 preferably comprises a plurality of user operable controls.

Preferably, the user interface 9 comprises user-operable activation and selection controls and/or pushbuttons.

Advantageously, the user interface 9 allows displaying information, even in real time, relating to the machine 1 and/or to the product being processed, such as, for example, the temperature of the air inside the space V, the temperature of the heat exchanger fluid, and the value of the relative humidity inside the space V.

Preferably, the control unit U is connected to the compressor 103 and/or to the throttle element 105 to regulate the flow of the heat exchanger fluid in the closed circuit 101.

Advantageously, together with the control unit U, the user interface 9 can be used to control several aspects of the machine 1 such as, for example, the flow of heat exchanger fluid in the closed circuit 101 through the compressor 103 and/or the throttle element 105, the mutual rotational movement between the stirrer 4 and the container 3, extraction of air from the space V through the suction unit 71.

In an embodiment, the machine 1 comprises a plurality of containers 3 and a cover 6 for each of the containers 3 of the plurality of containers 3.

It should be noted that in such an embodiment, there is a plurality of spaces V, one for each cover 6 and respective container 3, and the machine comprises suctions mouths 72, connected to one or more suction units 71, in fluid communication with the spaces V to extract air from the interior of each of the spaces V.

## Claims

1. A machine for processing and storing liquid or semi-liquid food products, comprising:
- a main frame (2) having at least a top surface (21);
- at least one container (3) for containing the product to be processed and stored, the top surface (21) of the machine (1) having at least one opening (22) giving access to the container (3);
- a stirrer (4) mounted inside the container (3);
- an actuator (5) connected to the stirrer (4) or to the container (3) to drive the stirrer (4) relative to the container (3) or the container (3) relative to the stirrer (4), respectively, in rotation about a mixing axis (A);
- a refrigeration system (100), comprising: a closed circuit (101) configured to circulate a heat exchanger fluid, an evaporator (102) associated with the container (3), a compressor (103), a condenser (104) and a throttle element (105), said heat exchanger fluid flowing along the closed circuit (101) through the following, in succession: the evaporator (102), the compressor (103), the condenser (104) and the throttle element (105), in that order;
- a cover (6) movable between a closed position, where it closes said opening (22) to deny access to the container (3), and an open position, where it opens said opening (22) to give access to the container (3), the cover (6) defining, at the closed position, a space (V) between an inside surface (61) of the cover (6) and the top surface (21) of the main frame (2);
- a suction system (7) for extracting air from said space (V), comprising at least one suction unit (71) and one or more suction mouths (72) connected to the suction unit (71), each suction mouth (72) being in fluid communication with said space (V);
- a control unit (U) configured to control at least the actuator (5) and the suction unit (71).

2. The machine according to claim 1, comprising at least one sensor (8), configured for detecting a parameter defining an ambient condition of the product to be processed, the sensor (8) being connected to the control unit (U) to send it a signal relating to said parameter defining an ambient condition of the product to be processed, the control unit (U) being configured for controlling the suction unit (71) as a function of said signal.

3. The machine according to the preceding claim, wherein at least one sensor (8) is an air temperature sensor (81), located inside said space (V) defined between the inside surface (61) of the cover (6) and the top surface (21) of the main frame (2), to detect a temperature of the air inside said space (V).

4. The machine according to claim 2 or 3, wherein at least one sensor (8) is a temperature sensor (82) for the heat exchanger fluid, located in the evaporator (102), for detecting a temperature of the heat exchanger fluid.

5. The machine according to any one of claims 2 to 4, wherein at least one sensor (8) is a hygrometer (83), located inside said space (V) defined between the inside surface (61) of the cover (6) and the top surface (21) of the main frame (2), to detect a value of the relative humidity inside said space (V).

6. The machine according to the preceding claim, wherein one or more suction mouths (72) are located at a respective portion of the top surface (21) of the main frame (2).

7. The machine according to any one of the preceding claims, wherein one or more suction mouths (72) are located at a portion of the cover (6).

8. The machine according to any one of the preceding claims, wherein the suction unit (71) is a pump configured for extracting air.

9. The machine according to any one of the preceding claims, wherein the cover (6) comprises a closing portion (62) for closing the opening (22) which gives access to the container (3).

10. The machine according to the preceding claim, wherein the container (3) has walls with an inside surface (31), the machine comprising a gasket located between the inside surface (31) of the container (3) and the closing portion of the cover (6).

11. The machine according to any one of the preceding claims, wherein the container (6) is made from transparent material.

12. The machine according to any one of the preceding claims, comprising a plurality of containers (3) and a cover (6) for each of the containers (3) of the plurality of containers (3).

13. The machine according to any one of the preceding claims, comprising a user interface (9) connected to the control unit (U) and comprising at least one user activable control.

## Patentansprüche

1. Maschine zur Verarbeitung und Lagerung flüssiger oder halbflüssiger Lebensmittelprodukte, umfassend:
- einen Hauptrahmen (2), der mindestens eine oberseitige Oberfläche (21) aufweist;
- mindestens einen Behälter (3) zum Enthalten des zu verarbeitenden und zu lagernden Produkts, wobei die oberseitige Oberfläche (21) der Maschine (1) mindestens eine Öffnung (22) aufweist, die den Zugang zum Behälter (3) ermöglicht;
- ein Rührwerk (4), das innerhalb des Behälters (3) montiert ist;
- einen Aktuator (5), der mit dem Rührwerk (4) oder dem Behälter (3) verbunden ist, um das Rührwerk (4) relativ zum Behälter (3) bzw. den Behälter (3) relativ zum Rührwerk (4) um eine Mischachse (A) in Drehung zu versetzen;
- ein Kühlsystem (100), das Folgendes umfasst: einen geschlossenen Kreislauf (101), der ausgelegt ist, um ein Wärmetauschermedium zirkulieren zu lassen, einen Verdampfer (102), der mit dem Behälter (3) verbunden ist, einen Kompressor (103), einen Kondensator (104) und ein Drosselelement (105), wobei das Wärmetauschermedium entlang des geschlossenen Kreislaufs (101) nacheinander durch Folgendes strömt: den Verdampfer (102), den Kompressor (103), den Kondensator (104) und das Drosselelement (105) in dieser Reihenfolge;
- eine Abdeckung (6) bewegbar zwischen einer geschlossenen Position, in der sie die Öffnung (22) schließt, um den Zugang zum Behälter (3) zu verhindern, und einer offenen Position, in der sie die Öffnung (22) öffnet, um den Zugang zum Behälter (3) zu ermöglichen, wobei die Abdeckung (6) in der geschlossenen Position einen Raum (V) zwischen einer innenseitigen Oberfläche (61) der Abdeckung (6) und der oberseitigen Oberfläche (21) des Hauptrahmens (2) bildet;
- ein Saugsystem (7) zum Extrahieren von Luft aus dem Raum (V), umfassend mindestens eine Saugeinheit (71) und eine oder mehrere mit der Saugeinheit (71) verbundene Saugöffnungen (72), wobei jede Saugöffnung (72) in Fluidkommunikation mit dem Raum (V) steht;
- eine Steuereinheit (U), die ausgelegt ist, um mindestens den Aktuator (5) und die Saugeinheit (71) zu steuern.

2. Maschine nach Anspruch 1, umfassend mindestens einen Sensor (8), ausgelegt zum Erfassen eines Parameters, der eine Umgebungsbedingung des zu verarbeitenden Produkts definiert, wobei der Sensor (8) mit der Steuereinheit (U) verbunden ist, um dieser ein Signal zu senden, das sich auf den Parameter bezieht, der eine Umgebungsbedingung des zu verarbeitenden Produkts definiert, wobei die Steuereinheit (U) dazu ausgelegt ist, die Saugeinheit (71) in Abhängigkeit von dem Signal zu steuern.

3. Maschine nach dem vorhergehenden Anspruch, wobei mindestens ein Sensor (8) ein Lufttemperatursensor (81) ist, der sich innerhalb des zwischen der innenseitigen Oberfläche (61) der Abdeckung (6) und der oberseitigen Oberfläche (21) des Hauptrahmens (2) definierten Raums (V) befindet, um die Temperatur der Luft innerhalb dieses Raums (V) zu erfassen.

4. Maschine nach Anspruch 2 oder 3, wobei mindestens ein Sensor (8) ein Temperatursensor (82) für das Wärmetauschermedium ist, der sich im Verdampfer (102) befindet, der dazu dient, die Temperatur des Wärmetauschermediums zu erfassen.

5. Maschine nach einem der Ansprüche 2 bis 4, wobei mindestens ein Sensor (8) ein Feuchtigkeitsmesser (83) ist, der sich innerhalb des zwischen der innenseitigen Oberfläche (61) der Abdeckung (6) und der oberseitigen Oberfläche (21) des Hauptrahmens (2) definierten Raums (V) befindet, um einen Wert der relativen Luftfeuchte innerhalb des Raums (V) zu erfassen.

6. Maschine nach dem vorhergehenden Anspruch, wobei sich eine oder mehrere Saugöffnungen (72) an einem jeweiligen Abschnitt der oberseitigen Oberfläche (21) des Hauptrahmens (2) befindet.

7. Maschine nach einem der vorhergehenden Ansprüche, wobei sich eine oder mehrere Saugöffnungen (72) an einem Abschnitt der Abdeckung (6) befindet.

8. Maschine nach einem der vorhergehenden Ansprüche, wobei die Saugeinheit (71) eine Pumpe ist, die zum Extrahieren von Luft ausgelegt ist.

9. Maschine nach einem der vorhergehenden Ansprüche, wobei die Abdeckung (6) einen Schließabschnitt (62) zum Verschließen der Öffnung (22) umfasst, die den Zugang zum Behälter (3) ermöglicht.

10. Maschine nach dem vorhergehenden Anspruch, wobei der Behälter (3) Wände mit einer innenseitigen Oberfläche (31) aufweist, wobei die Maschine eine Dichtung umfasst, die sich zwischen der innenseitigen Oberfläche (31) des Behälters (3) und dem Schließabschnitt der Abdeckung (6) befindet.

11. Maschine nach einem der vorhergehenden Ansprüche, wobei der Behälter (6) aus transparentem Material besteht.

12. Maschine nach einem der vorhergehenden Ansprüche, umfassend eine Vielzahl von Behältern (3) und eine Abdeckung (6) für jeden der Behälter (3) der Vielzahl von Behältern (3).

13. Maschine nach einem der vorhergehenden Ansprüche, umfassend eine Benutzerschnittstelle (9), die mit der Steuereinheit (U) verbunden ist und mindestens eine nutzeraktivierbare Steuerung umfasst.

## Revendications

1. Machine de traitement et de stockage de produits alimentaires liquides ou semi-liquides, comprenant :
- un châssis principal (2) ayant au moins une surface supérieure (21) ;
- au moins un récipient (3) pour contenir le produit à traiter et à stocker, la surface supérieure (21) de la machine (1) comportant au moins une ouverture (22) donnant accès au récipient (3) ;
- un agitateur (4) monté à l'intérieur du récipient (3) ;
- un actionneur (5) relié à l'agitateur (4) ou au récipient (3) pour entraîner l'agitateur (4) par rapport au récipient (3) ou le récipient (3) par rapport à l'agitateur (4), respectivement, en rotation autour d'un axe de mélange (A) ;
- un système de réfrigération (100), comprenant : un circuit fermé (101) configuré pour faire circuler un fluide échangeur de chaleur, un évaporateur (102) associé au récipient (3), un compresseur (103), un condenseur (104) et un élément d'étranglement (105), ledit fluide échangeur de chaleur circulant le long du circuit fermé (101) à travers successivement : l'évaporateur (102), le compresseur (103), le condenseur (104) et l'élément d'étranglement (105), dans cet ordre ;
- un couvercle (6) mobile entre une position fermée, où il ferme ladite ouverture (22) pour interdire l'accès au récipient (3), et une position ouverte, où il ouvre ladite ouverture (22) pour donner accès au récipient (3), le couvercle (6) définissant, en position fermée, un espace (V) entre une surface interne (61) du couvercle (6) et la surface supérieure (21) du châssis principal (2) ;
- un système d'aspiration (7) pour extraire l'air dudit espace (V), comprenant au moins une unité d'aspiration (71) et une ou plusieurs bouches d'aspiration (72) reliées à l'unité d'aspiration (71), chaque bouche d'aspiration (72) étant en communication fluidique avec ledit espace (V) ;
- une unité de commande (U) configurée pour commander au moins l'actionneur (5) et l'unité d'aspiration (71).

2. Machine selon la revendication 1, comprenant au moins un capteur (8), configuré pour détecter un paramètre définissant une condition ambiante du produit à traiter, le capteur (8) étant connecté à l'unité de commande (U) pour lui envoyer un signal relatif audit paramètre définissant une condition ambiante du produit à traiter, l'unité de commande (U) étant configurée pour commander l'unité d'aspiration (71) en fonction dudit signal.

3. Machine selon la revendication précédente, dans laquelle au moins un capteur (8) est un capteur de température de l'air (81), situé à l'intérieur dudit espace (V) défini entre la surface interne (61) du couvercle (6) et la surface supérieure (21) du châssis principal (2), pour détecter une température de l'air à l'intérieur dudit espace (V).

4. Machine selon la revendication 2 ou 3, dans laquelle au moins un capteur (8) est un capteur de température (82) pour le fluide échangeur de chaleur, situé dans l'évaporateur (102), pour détecter une température du fluide échangeur de chaleur.

5. Machine selon l'une quelconque des revendications 2 à 4, dans laquelle au moins un capteur (8) est un hygromètre (83), situé à l'intérieur dudit espace (V) défini entre la surface interne (61) du couvercle (6) et la surface supérieure (21) du châssis principal (2), pour détecter une valeur de l'humidité relative à l'intérieur dudit espace (V).

6. Machine selon la revendication précédente, dans laquelle une ou plusieurs bouches d'aspiration (72) sont situées au niveau d'une portion respective de la surface supérieure (21) du châssis principal (2).

7. Machine selon l'une quelconque des revendications précédentes, dans laquelle une ou plusieurs bouches d'aspiration (72) sont situées au niveau d'une portion du couvercle (6).

8. Machine selon l'une quelconque des revendications précédentes, dans laquelle l'unité d'aspiration (71) est une pompe configurée pour extraire de l'air.

9. Machine selon l'une quelconque des revendications précédentes, dans laquelle le couvercle (6) comprend une portion de fermeture (62) pour fermer l'ouverture (22) qui donne accès au récipient (3).

10. Machine selon la revendication précédente, dans laquelle le récipient (3) a des parois avec une surface interne (31), la machine comprenant un joint d'étanchéité situé entre la surface interne (31) du récipient (3) et la portion de fermeture du couvercle (6).

11. Machine selon l'une quelconque des revendications précédentes, dans laquelle le récipient (6) est fabriqué à partir d'un matériau transparent.

12. Machine selon l'une quelconque des revendications précédentes, comprenant une pluralité de récipients (3) et un couvercle (6) pour chacun des récipients (3) de la pluralité de récipients (3).

13. Machine selon l'une quelconque des revendications précédentes, comprenant une interface utilisateur (9) connectée à l'unité de commande (U) et comprenant au moins une commande activable par l'utilisateur.
